# FASCICULE DE BREVET EUROPEEN

(11) **EP 4 133 237 B1**
(45) Date de publication et mention de la délivrance du brevet: **01.05.2024**
(21) Numéro de dépôt: 21716424.3
(22) Date de dépôt: 02.04.2021
(51) Int. Cl.: G01D 11/30, G01D 5/14, G01D 5/244

(54) **DISPOSITIF DE MESURE DE POSITION DE ROTOR POUR UNITÉ DE STATOR DE MACHINE ÉLECTRIQUE TOURNANTE**
ROTORLAGEMESSEINRICHTUNG FÜR EINE STATOREINHEIT EINER ELEKTRISCHEN DREHMASCHINE
ROTOR POSITION MEASURING DEVICE FOR A STATOR UNIT OF A ROTARY ELECTRIC MACHINE

(30) Priorité: 06.04.2020 FR 2003410
(43) Date de publication de la demande: 15.02.2023
(73) Titulaire: VALEO EQUIPEMENTS ELECTRIQUES MOTEUR, 94046 Créteil Cedex (FR)
(72) Inventeur: RIVALS, Alexis, 94046 CRETEIL CEDEX (FR); SQUITIERO, Thomas, 94046 CRETEIL CEDEX (FR)
(74) Mandataire: Valeo Powertrain Systems
(86) Numéro de dépôt international: PCT/EP2021/058808
(87) Numéro de publication internationale: WO 2021/204726

(56) Documents cités:
- FR-A1- 2 806 224
- FR-A1- 2 998 734
- FR-A1- 3 051 999
- JP-A- 2002 357 457
- JP-A- 2003 014 497
- US-A1- 2008 001 106

## Description

La présente invention concerne un dispositif de mesure de position pour unité de stator de machine électrique tournante, une unité de stator comprenant un tel dispositif de mesure de position et une machine électrique tournante comprenant cette unité de stator.

FR 3 051 999 A1 divulgue une machine électrique tournante munie d'une plaque de maintien d'un capteur de position angulaire du rotor.

L'invention se rapporte au domaine des machines électriques tournantes telles que les moteurs électriques, les alternateurs, ou les alterno-démarreurs pour les véhicules automobiles.

L'invention concerne plus précisément des machines électriques, de 48V par exemple, positionnées sur la boite de vitesse ou à l'arrière d'un véhicule électrique.

Les machines électriques tournantes comprennent une unité de stator comportant un stator muni d'au moins un bobinage en cuivre. Les machines électriques tournantes comprennent également un rotor monté en rotation dans l'unité de stator et par rapport à celle-ci. L'unité de stator comprend un carter entourant et protégeant le stator.

Il existe des machines électriques d'une puissance de 15kW refroidies à l'eau. L'intérieur de la machine électrique n'est pas en contact de l'eau, ni de l'huile mais seulement de l'air.

La machine électrique comprend un dispositif de mesure de position comportant un compartiment de capteur destiné à loger au moins un capteur de position mesurant la position du rotor par rapport au stator. L'utilisation de plusieurs capteurs de position permet également de mesurer la position et la vitesse du rotor.

Le dispositif de mesure de position est positionné radialement à l'intérieur du bobinage, et en regard d'une cible en rotation fixée au rotor, de façon à permettre au capteur de position de détecter la cible.

Classiquement, le capteur de position est un capteur à effet Hall détectant des aimants faisant partie de la cible.

Le dispositif de mesure de position comprend un bras de fixation faisant saillie perpendiculairement par rapport au compartiment de capteur vers l'axe de rotation du rotor.

Le carter de l'unité de stator comprend un palier ou flasque positionné à une extrémité axiale de la machine électrique tournante. Le bras de fixation comprend une partie d'extrémité fixée sur ce palier.

La partie d'extrémité comprend un orifice présentant un axe central aligné avec l'axe de rotation du rotor. L'orifice est délimité par une bordure qui est maintenue en appui contre le palier au moyen d'une plaque de maintien fixée au palier par trois vis.

La bordure de la partie d'extrémité du dispositif de mesure de position est ainsi prise en sandwich entre le palier et la plaque de maintien.

Le dispositif de mesure de position est agencé de façon à pouvoir être tourné manuellement par rapport au palier et à la cible du rotor autour de l'axe de rotation du rotor avant sa fixation définitive sur le palier.

Ceci permet de calibrer ou synchroniser manuellement le signal de la cible du rotor avec les capteurs de position.

Le dispositif de mesure de position est ensuite fixé définitivement au palier.

Le dispositif de mesure de position et donc le bras de fixation sont en matière plastique alors que le palier et la plaque de maintien sont en métal. Cependant, après des chocs thermiques ou des vibrations, il arrive que les capteurs de positions ne soient plus calibrés avec la cible.

Ceci est due au fait que le bras de fixation, le palier et la plaque de maintien sont constitués de différents matériaux ayant des coefficients de dilatation différents. Leur dilation n'est donc pas identique, modifiant la friction entre les différentes pièces et entrainant un jeu entre le bras de support, le palier et la plaque de maintien.

Le dispositif de mesure de position tourne alors légèrement, se décalant de la cible et entrainant une désynchronisation entre les capteurs de position et la cible.

De plus, ces systèmes de fixation du dispositif de mesure de position nécessitent plusieurs pièces, complexifiant la fabrication, le montage et nécessitant la gestion de plusieurs pièces de référence. Ceci entraine des temps de fabrication plus longs et un coût de fabrication plus important.

L'invention a vise donc à résoudre ces inconvénients de l'art antérieur en proposant un dispositif de mesure de position pour unité de stator de machine électrique tournante plus simple à fixer sur un support, tel un palier d'unité de stator, et permettant un processus de fabrication plus simple.

Un autre objectif de l'invention est de réduire le risque de désynchronisation (ou de perte de calibration) entre les capteurs de position du dispositif de mesure de position et une cible reliée au rotor.

L'invention concerne un dispositif de mesure de position pour unité de stator de machine électrique tournante comprenant un stator dans lequel est disposé un bobinage. La machine électrique tournante comprend un rotor monté dans et en rotation par rapport à l'unité de stator suivant un axe de rotation C. Le dispositif de mesure de position comprend un compartiment de capteur destiné à loger au moins un capteur de position mesurant la position du rotor par rapport à l'unité de stator. Le dispositif de mesure de position est destiné à être positionné dans une zone d'extrémité axiale de l'unité de stator de façon à permettre au capteur de position de détecter une cible en rotation reliée au rotor. Le dispositif de mesure de position comprend un bras de fixation faisant saillie par rapport au compartiment de capteur vers l'axe de rotation C.

Selon l'invention, le dispositif de mesure de position comprend des moyens de fixation reliés au bras de fixation et destinés à être fixés sur un palier de l'unité de stator. Le palier (ou support) est positionné à une extrémité axiale de l'unité de stator.

L'invention fournit ainsi un dispositif de mesure de position pour unité de stator de machine électrique tournante plus simple à fixer sur un support tel un palier de l'unité de stator et permettant un processus de fabrication plus simple.

Contrairement aux systèmes de fixation connus, le nombre de pièces de fixation est réduit. En effet les moyens de fixation du dispositif de mesure de position étant reliés au bras de fixation, ces moyens de fixation et le bras de fixation sont solidaires avant même que le dispositif de mesure de position ne soit fixé, par l'intermédiaire de ces moyens de fixation, au palier de l'unité de stator.

Les coûts de fabrication sont alors réduits. Le nombre de référence de pièces à gérer est également réduit.

Le compartiment de capteur et le bras de fixation sont en polymère, les moyens de fixation étant en métal.

Selon l'invention, l'élément de fixation et le palier étant tous deux en métal (assemblage métal sur métal), il n'y a pas de risque de jeu entre ces deux éléments lors de chocs thermiques accompagnés de vibrations et donc pas de risque de désynchronisation entre les capteurs de position et la cible.

Les moyens de fixation sont surmoulés dans le bras de fixation lors d'une opération de surmoulage de façon à obtenir des moyens de fixation intégrés dans le bras de fixation.

Ceci permet de simplifier le processus de fabrication du dispositif de mesure de position. Une seule étape de moulage est nécessaire. Il y a moins de pièces à assembler et à gérer.

Alternativement, les moyens de fixation sont formés d'une ou plusieurs pièces distinctes du bras de fixation et fixées à ce dernier.

Le bras de fixation comprend une bordure périphérique et une fente longeant la bordure périphérique. Les moyens de fixation sont partiellement insérés dans la fente entre une portion supérieure et une portion inférieure du bras de fixation délimitant la fente.

Ceci permet d'obtenir un assemblage simple et solide.

Les moyens de fixation s'étendent par rapport au bras de fixation dans un même plan (X, Y) que ce dernier. Les moyens de fixation et le bras de fixation forment un ensemble de fixation présentant une forme générale de disque. Avantageusement, les moyens de fixation sont formés d'un seul élément de fixation monobloc.

Ceci permet de simplifier le processus de fabrication du dispositif de mesure de position.

Le bras de fixation comprend une partie d'extrémité comprenant un orifice présentant un axe central C' destiné à être aligné avec l'axe de rotation C du rotor lorsque le dispositif de mesure de position est monté sur le palier. L'élément de fixation entoure au moins partiellement la partie d'extrémité du bras de fixation. Les moyens de fixation comprennent au moins un orifice de fixation destiné à recevoir une vis se vissant dans un orifice fileté prévu sur le palier de l'unité de stator.

Les moyens de fixation comprennent deux orifices de fixation positionnés en opposition et symétriquement par rapport à un plan passant par l'axe central C'. Chaque orifice de fixation présente une forme oblongue et incurvée. La courbure des orifices de fixation a pour centre de courbure l'axe central C'.

L'invention permet de pouvoir faire tourner facilement et manuellement le dispositif de mesure de position par rapport à l'unité de stator autour de l'axe de rotation C pour faire varier la position des capteurs de position par rapport à la cible.

Ceci permet de synchroniser ou calibrer les signaux des capteurs de position du dispositif de mesure de position avec la cible du rotor de manière simple et facilement, lors du montage.

L'invention concerne également une unité de stator de machine électrique tournante comprenant un stator muni d'un bobinage et un dispositif de mesure de position tel que défini précédemment.

L'invention concerne également une machine électrique tournante comprenant une unité de stator telle que définie précédemment. La machine électrique tournante comporte un rotor monté en rotation dans l'unité de stator.

Les caractéristiques ci-dessus pourront être utilisées seules ou en combinaison apportant chacune un avantage particulier.

Les caractéristiques de l'invention seront décrites plus en détail en se référant aux figures ci-dessous :
- la figure 1 est une représentation schématique d'une machine électrique tournante comprenant une unité de stator, selon un mode de réalisation de l'invention ;
- la figure 2 est une représentation schématique d'un dispositif de mesure de position ;
- la figure 3 est une représentation schématique, en coupe axiale, d'une partie d'extrémité d'un bras de support de ce dispositif de mesure de position.

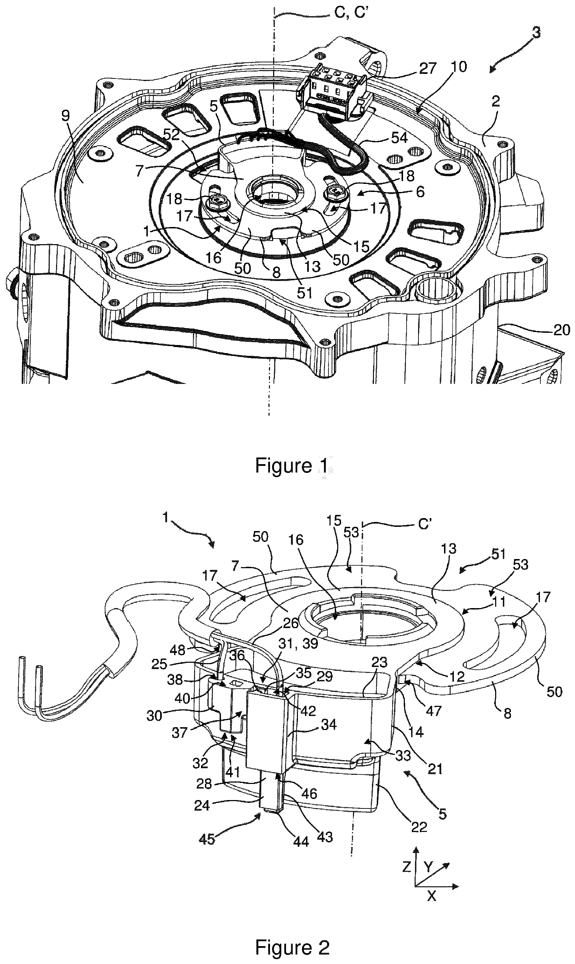

La figure 1 est une représentation schématique d'une machine électrique tournante 3 comprenant une unité de stator 2 comportant un dispositif de mesure de position 1, selon un mode de réalisation de l'invention.

La machine électrique tournante 3 dans cet exemple est un moteur électrique destiné à être positionné sur la boite de vitesse ou à l'arrière d'un véhicule électrique. Le moteur électrique peut avoir un voltage de 48V et une puissance de 15kW, par exemple.

L'invention s'applique également à d'autres types de machine électrique tournante tel qu'un alternateur ou un alterno-démarreur de véhicule automobile. L'unité de stator 2 comprend un stator dans lequel est disposé un bobinage. On entend par bobinage, une bobine ou plusieurs bobines à base de cuivre. La machine électrique tournante 3 comprend également un rotor monté en rotation par rapport à l'unité de stator 2 suivant un axe de rotation C à l'intérieur du bobinage.

Au sens de l'invention, « axial », « axialement » se rapportent à une direction suivant une parallèle à l'axe de rotation C.

L'unité de stator 2 comprend un carter 20 entourant le stator et le rotor pour les protéger. Le carter 20 comprend au moins un palier 9 (ou flasque) positionné à une extrémité axiale 10 de la machine électrique tournante 3. Le palier 9 s'étend de manière générale dans un plan perpendiculaire à l'axe de rotation C.

Le dispositif de mesure de position 1 comprend un compartiment de capteur 5 logeant au moins un capteur de position mesurant la position du rotor par rapport à l'unité de stator 2. Le dispositif de mesure de position 1 peut comprendre plusieurs capteurs de position pour mesurer la position et la vitesse du rotor.

Le dispositif de mesure de position 1 est positionné dans une zone d'extrémité axiale 6 de l'unité de stator 2 de façon à permettre au capteur de position de détecter une cible en rotation reliée au rotor. La zone d'extrémité axiale 6 correspond à une zone située entre le rotor et le palier et radialement à l'intérieur du bobinage et de l'unité de stator 2.

Le compartiment de capteur 5 et la cible sont positionnés dans une zone de mesure 52 de l'unité de stator 2.

Le dispositif de mesure de position 1 comprend un bras de fixation 7 faisant saillie par rapport au compartiment de capteur 5 vers l'axe de rotation C.

De préférence, le bras de fixation 7 fait saillie perpendiculairement par rapport au compartiment de capteur 5.

Ce type de dispositif de mesure de position 1 est utilisé pour des moteurs électriques à refroidissement par eau. Il est en contact de l'air et est positionné radialement à l'intérieur du bobinage.

Le compartiment de capteur 5 présente une forme incurvée avec une courbure ayant pour axe de courbure l'axe central C, comme illustrée sur la figure 2.

Le compartiment de capteur 5 comprend une partie supérieure 21 prolongée par une partie inférieure 22 de plus faible largeur, par exemple suivant la direction de l'axe central C. Les capteurs de position sont logés dans la partie inférieure 22. La partie supérieure est par exemple la partie la plus éloignée du rotor.

La partie supérieure 21 peut comprendre un dispositif électronique 23 telle une carte électronique ou un connecteur.

Les capteurs de position peuvent être des capteurs à effet Hall détectant la position et mesurant la vitesse du rotor au moyen d'aimants faisant partie de la cible fixée au rotor, par exemple. D'autres types de capteur de position peuvent être utilisés comme des capteurs optiques. Les capteurs à effet Hall sont reliés à un connecteur électrique 27 par un câble électrique 54.

Dans cet exemple, le dispositif de mesure de position 1 comprend un capteur de température 24 comportant une première extrémité reliée à deux fils électriques 25, 26.

Le capteur de température 24 est par exemple utilisé pour évaluer la température du bobinage. A cet effet le capteur de température 24 peut être positionné à une première distance du bobinage et une deuxième distance du rotor, la première distance pouvant être plus faible que la deuxième distance.

Dans un autre mode de réalisation de l'invention, le capteur de température 24 est par exemple utilisé pour évaluer la température du rotor. A cet effet le capteur de température 24 peut être positionné à une première distance du bobinage et une deuxième distance du rotor, la deuxième distance pouvant être plus faible que la première distance.

En variante, le dispositif de mesure de position 1 peut ne pas comprendre de capteur de température 24.

Les fils électriques 25, 26 sont également reliés au connecteur électrique 27 destiné à être connecté à un dispositif de contrôle (non représenté).

Le capteur de température 24 comprend une sonde de température de type CTN (Coefficient de Température Négatif) ou de type CTP (Coefficient de Température Positif). Ces sondes CTN et CTP sont des thermistances reliées aux deux fils électriques 25, 26 dont la résistance varie en fonction de la température.

D'autres types de capteurs de température peuvent être utilisés comme des thermocouples.

Ces sondes de température sont enveloppées dans un embout 28 pour protéger la thermistance. L'embout 28 contient de préférence du polytétrafluoroéthylène (PTFE).

D'autres types de sondes sont possibles, avec ou sans embout 28 contenant du PTFE.

Le dispositif de mesure de position 1 comprend des moyens de maintien 29, 30 comportant des moyens de blocage 31, 32 immobilisant au moins l'un des fils électriques 25, 26 du capteur de température 24 pour bloquer le déplacement du capteur de température 1 par rapport au compartiment de capteur 5.

Les moyens de maintien 29, 30 sont obtenus lors d'une opération de moulage du dispositif de mesure de position 1 de façon à les intégrer au dispositif de mesure de position 1 et former une pièce moulée unique.

Les moyens de maintien 29, 30, le compartiment de capteur 5 et le bras de fixation 7 sont donc formés ensemble lors du moulage pour former un même ensemble. Cet ensemble est en polymère notamment en matière plastique. Les moyens de maintien 29, 30 et le capteur de température 24 sont positionnés sur une face externe 33 de la partie supérieure 21 du compartiment de capteur 5. La face externe 33 est localisée du côté opposé à celui du bras de fixation 7. Le bras de fixation 7 s'étend suivant une direction X.

Les moyens de maintien 29, 30 comprennent un logement 29 (ou compartiment) dans lequel est inséré le capteur de température 24. Le logement 29 est délimité par une paroi périphérique 34 dont les dimensions par rapport à celles du capteur de température 24 sont choisies pour limiter son déplacement par rapport au compartiment de capteur 5.

La section du capteur de température 24 est légèrement plus petite que celle du logement 29 de façon à ce que la paroi périphérique 34 vienne en contact avec l'embout 28 du capteur de température 24. Ainsi, la paroi périphérique 34 maintient le capteur de température 24 bloqué suivant au moins deux directions X et Y, perpendiculaires entre elles et par rapport à une direction longitudinale Z. La direction longitudinale Z est de préférence parallèle à l'axe central C' du bras de fixation 7, comme représentée sur la figure 2.

En variante, la direction longitudinale Z n'est pas parallèle à l'axe central C'.

Le capteur de température 24 et le logement 29 présentent une forme allongée et s'étendent suivant la direction longitudinale Z.

Le capteur de température 24 et le logement 29 présentent une forme parallélépipédique dans l'exemple de la figure 2. D'autres formes sont possibles comme des formes cylindriques, par exemple.

Dans cet exemple, un seul des fils électriques 25, 26 est immobilisé formant un fil électrique bloqué 25.

En variante, les deux fils électriques 25, 26 forment un faisceau de fils immobilisé par les moyens de maintien 29, 30.

Ce qui est décrit par la suite pour un fil électrique s'applique également à plusieurs fils électriques ou un faisceau de fils électriques entouré d'une gaine. La faisceau ou câble de fils électriques est immobilisé par les moyens de maintien 29, 30.

Plusieurs câbles de fils électriques peuvent être immobilisés par les moyens de maintien 29, 30.

Le fil électrique bloqué 25 traverse les moyens de maintien 29, 30 de façon à former un chemin de blocage dans lequel le fil électrique bloqué 25 présente au moins un changement d'orientation et au moins une courbure.

De préférence, le fil électrique bloqué 25 traverse les moyens de maintien 29, 30 de façon à former un chemin de blocage dans lequel le fil électrique bloqué 25 présente au moins deux changements d'orientation et au moins deux courbures.

Avantageusement, le fil électrique bloqué 25 est entrelacé dans les moyens de maintien 29, 30 de façon à former un chemin de blocage en forme de « S ».

Les moyens de blocage 31, 32 comprennent un premier élément de blocage 31 pour bloquer ou maintenir une première portion de fil.

La paroi périphérique 33 du logement 29 comprend une fente 39 s'étendant suivant la direction longitudinale Z et qui est délimitée par deux bords 35, 36 opposés formant le premier élément de blocage 31.

La fente 39 est formée sur une première cloison latérale 37 du logement 29.

La première portion de fil est pincée entre les deux bords 35, 36 de façon à ce qu'une gaine de protection entourant le fil électrique soit légèrement déformée. Les moyens de maintien 29, 30 comprennent un élément de maintien 30 positionné sur le dispositif de mesure de position 1. L'élément de maintien 30 est adjacent au logement 29. L'élément de maintien 30 est positionné en face de la première cloison latérale 37 du logement 29.

L'élément de maintien 30 et le logement 29 forment une protubérance sur la face externe 33 de la partie supérieure 21 du compartiment de capteur 5.

L'élément de maintien 30 présente une forme générale parallélépipédique.

Les moyens de blocage 31, 32 comprennent un deuxième élément de blocage 32 pour bloquer une deuxième portion de fil distante de la première portion de fil. Le deuxième élément de blocage 32 comprend un ergot (non illustré) maintenant la deuxième portion de fil bloquée entre une surface d'appui inférieure prévue sur l'élément de maintien 30 et l'ergot.

L'ergot est positionné à une partie inférieure 41 de l'élément de maintien 30. L'ergot forme un clip. Pour introduire la deuxième portion de fil entre l'ergot et la surface d'appui inférieure, la deuxième portion de fil est poussée contre la face externe de l'ergot qui se déforme pour laisser passer le fil.

L'élément de maintien 30 comprend un canal 38 traversé par le fil électrique bloqué 25. Le canal 38 débouche de l'élément de maintien 30 par une face supérieure 40 de l'élément de maintien 30.

Le canal 38 est sensiblement parallèle à la fente 39 et donc à la direction longitudinale Z.

Le logement 29 comprend une première ouverture 42 pour l'insertion du capteur de température 24.

La paroi périphérique 34 du logement 29 est prolongée, suivant la direction longitudinale Z et selon un sens opposé à la première ouverture 42, par une patte 43 reliée au dispositif de mesure de position 1 et comportant un rebord 44.

Le rebord 44 fait saillie par rapport à la patte 43 de façon à former une butée pour une deuxième extrémité 45 du capteur de température 24. La deuxième extrémité 45 est opposée à la première extrémité

Ainsi, une portion du capteur de température 24 ressort du logement 29 par une deuxième ouverture 46 opposée à la première ouverture 42.

Le fil électrique non bloqué 26 ressort par la première ouverture 42.

En variante et comme dit précédemment, le dispositif de mesure de position 1 peut ne pas comprendre de capteur de température 24, ni de moyens de maintien 29, 30.

Selon l'invention, le dispositif de mesure de position 1 comprend des moyens de fixation 8 reliés au bras de fixation 7. Les moyens de fixation 8 sont solidaires du bras de fixation 7. Les moyens de fixation 8 sont fixés sur le palier 9 de l'unité de stator 2 de la machine électrique tournante 3. Le dispositif de mesure de position 1 est fixe par rapport au rotor.

Le palier 9 est positionné à une extrémité axiale 10 de l'unité de stator 2.

Selon l'invention, le compartiment de capteur 5 et le bras de fixation 7 sont en polymère, les moyens de fixation 8 étant en métal.

Selon l'invention, les moyens de fixation 8 sont surmoulés dans le bras de fixation 7 lors d'une opération de surmoulage de façon à obtenir des moyens de fixation 8 intégrés dans le bras de fixation 7.

Les moyens de fixation 8, le bras de fixation 7 et le compartiment de capteur 5 forment une même pièce composite.

Les moyens de fixation 8 peuvent être formés d'un seul élément de fixation 8 ou de plusieurs éléments de fixation 8 reliés au bras de fixation 7, notamment de deux éléments de fixation 8.

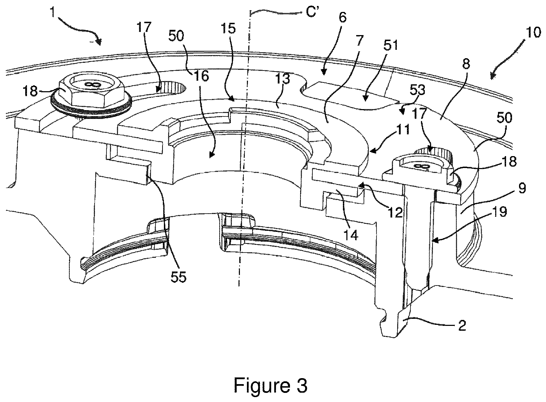

Avantageusement, les moyens de fixation 8 sont formés d'un seul élément de fixation 8 monobloc, comme illustré sur les figures 1 à 3.

Alternativement, les moyens de fixation 8 sont formés d'un ou plusieurs éléments de fixation 8 distincts du bras de fixation 7 et fixés à ce dernier par collage ou d'autres moyens de fixation. Par opposition au mode de réalisation précédent, le bras de fixation 7 et le compartiment de capteur 5 en polymère sont fabriqués lors d'une opération de moulage, par exemple. Les moyens de fixation 8 en métal sont ensuite fixés sur cet ensemble en polymère.

Le bras de fixation 7 comprend une bordure périphérique 11 et une fente 12 longeant la bordure périphérique 11. La fente 11 s'étend à l'intérieur du bras de fixation 7.

Les moyens de fixation 8 sont partiellement insérés dans la fente 12 entre une portion supérieure 13 et une portion inférieure 14 du bras de fixation 7 délimitant la fente 12.

D'autres modes de réalisation sont possibles, les moyens de fixation 8 pouvant être positionnés sur une face supérieure ou inférieure du bras de fixation 7.

Les moyens de fixation 8 s'étendent par rapport au bras de fixation 7 dans un même plan X, Y que ce dernier. Les moyens de fixation 8 et le bras de fixation 7 forment un ensemble de fixation 4 plat présentant une forme générale de disque. D'autres formes sont possibles.

Le bras de fixation 7 comprend une partie d'extrémité 15 comprenant un orifice 16 présentant un axe central C' destiné à être aligné avec l'axe de rotation C du rotor lorsque le dispositif de mesure de position 1 est monté sur le palier 9.

Les moyens de fixation 8 entourent au moins partiellement la partie d'extrémité 15 du bras de fixation 7.

Dans les exemples des figures 1 à 3, les moyens de fixation 8 sont formés d'un seul élément de fixation 8 qui entoure complètement la partie d'extrémité 15 du bras de fixation 7.

L'élément de fixation 8 peut comprendre deux extrémités 47, 48 opposées séparées par une ouverture.

Les deux extrémités 47, 48 sont en regard du compartiment de capteur 5, c'est-à-dire à proximité de ce dernier.

En variante, ces deux extrémités 47, 48 peuvent se relier à l'intérieur du bras de fixation 7.

L'élément de fixation 8 entoure la partie d'extrémité 15 du bras de fixation 7 de façon à présenter une symétrie par rapport à un plan de symétrie parallèle à un plan (Z, X) et passant par l'axe central C' de l'orifice 16. Le plan de symétrie peut traverser un milieu du compartiment de capteur 5.

L'élément de fixation 8 comprend deux parties 50 identiques séparées par le plan de symétrie. Ces deux parties 50 présentent une forme générale d'oreille. L'élément de fixation 8 comprend une échancrure 51 entre les deux parties 50. En variante, l'élément de fixation 8 entoure partiellement la bordure périphérique 11 de la partie d'extrémité 15.

Les moyens de fixation 8 comprennent au moins un orifice de fixation 17 destiné à recevoir une vis 18 se vissant dans un orifice fileté 19 prévu sur le palier 9 de l'unité de stator 2.

Dans l'exemple des figures 1 à 3, les moyens de fixation 8 formés d'un seul élément de fixation 8 comprennent deux orifices de fixation 17 positionnés en opposition et symétriquement par rapport au plan de symétrie passant par l'axe central C'.

Chaque orifice de fixation 17 présente une forme oblongue et incurvée (ou concave en l'observant depuis l'axe central C'). La courbure des orifices de fixation 17 a pour centre de courbure l'axe central C'.

Les orifices de fixation 17 sont suffisamment étendus pour permettre d'appliquer un mouvement de rotation au dispositif de mesure de position 1 pour calibrer les capteurs de position avec la cible du rotor.

Les orifices de fixation 17 s'étendent sur une longueur d'au moins 1 cm et de préférence d'au moins 2 cm.

Selon un autre mode de réalisation de l'invention non représenté, les moyens de fixation 8 comprennent des tubes métalliques de forme oblongue et incurvés, surmoulés dans le bras de fixation 7 en polymère. Les tubes métalliques forment des petites entretoises tubulaires.

L'invention concerne également une unité de stator 2 de machine électrique tournante 3 comprenant un stator muni d'un bobinage, telle qu'illustrée sur la figure 1. L'unité de stator 2 comprend un dispositif de mesure de position 1 tel que défini précédemment.

Les deux parties 50 de l'élément de fixation 8 comprennent chacune une surface inférieure et une surface supérieure 53 plates et opposées.

Lors de l'installation du dispositif de mesure de position 1 sur le palier 9 de l'unité de stator 2, la partie d'extrémité 15 du bras de fixation 7 est positionnée sur le palier 9 de l'unité de stator 2 de façon à ce que l'axe central C' de l'orifice 16 de la partie d'extrémité 15 du bras de fixation 7 soit aligné avec l'axe de rotation C du rotor ou du logement cylindrique prévu dans l'unité de stator 2 pour recevoir le rotor.

La partie d'extrémité 15 du bras de fixation 7 peut comprendre une excroissance se logeant dans un alésage 55 ayant pour axe l'axe de rotation C de manière à assurer le positionnement, notamment l'alignement, de l'axe central C' par rapport à l'axe de rotation C.

Le logement cylindrique et l'orifice 16 de la partie d'extrémité 15 du bras de fixation 7 sont alignés.

Le compartiment de capteur 5 est positionné dans la zone de mesure 52 de l'unité de stator 2 de façon à ce que la partie inférieure 22 du compartiment de capteur 5 et par conséquent les capteurs de position soient en face de la cible du rotor.

Des vis 18 sont insérées dans chaque orifice fileté 19 prévu sur le palier 9 de l'unité de stator 2 et ne sont pas vissées complètement dans un premier temps. Ceci permet de pouvoir tourner facilement le dispositif de mesure de position 1 par rapport à l'unité de stator 2 et autour de l'axe de rotation C pour faire varier la position des capteurs de position par rapport à la cible. Ceci permet de synchroniser ou calibrer les signaux des capteurs de position du dispositif de mesure de position 1 avec la cible.

Les capteurs de position permettent de mesurer la position du rotor par rapport à l'unité de stator 2 et également la vitesse du rotor.

Dans le cas de capteurs à effet Hall, ces capteurs sont calibrés avec des aimants prévus sur la cible.

Une fois la calibration réalisée, les vis 18 sont complètement vissées pour serrer et bloquer l'élément de fixation 8 contre le palier 9 de l'unité de stator 2.

L'élément de fixation 8 et le palier 9 étant tous deux en métal, il n'y a pas de risque de jeu entre ces deux éléments lors de chocs thermiques accompagnés de vibrations et donc pas de risque de désynchronisation entre les capteurs de position et la cible.

L'invention concerne également une machine électrique tournante 3 comprenant une telle unité de stator 2.

La machine électrique tournante 3 est avantageusement un moteur électrique refroidi à l'eau et destiné à être positionné sur la boite de vitesse ou à l'arrière d'un véhicule électrique. Le moteur électrique a un voltage de 48V et une puissance de 15kW, par exemple.

## Revendications

1. Dispositif de mesure de position (1) pour unité de stator (2) de machine électrique tournante (3) comprenant un stator dans lequel est disposé un bobinage, la machine électrique tournante (3) comprenant un rotor monté en rotation dans et par rapport à l'unité de stator (2) suivant un axe de rotation (C), le dispositif de mesure de position (1) comprenant un compartiment de capteur (5) destiné à loger au moins un capteur de position mesurant la position du rotor par rapport à l'unité de stator (2), le dispositif de mesure de position (1) étant destiné à être positionné dans une zone d'extrémité axiale (6) de l'unité de stator (2) de façon à permettre au capteur de position de détecter une cible en rotation reliée au rotor, le dispositif de mesure de position (1) comprenant un bras de fixation (7) faisant saillie par rapport au compartiment de capteur (5) vers l'axe de rotation (C), et comprenant des moyens de fixation (8) reliés au bras de fixation (7) et destinés à être fixés sur un palier (9) de l'unité de stator (2), le palier (9) étant en métal et étant positionné à une extrémité axiale (10) de l'unité de stator (2), le compartiment de capteur (5) et le bras de fixation (7) étant en polymère et les moyens de fixation (8) étant en métal, **caractérisé en ce que** les moyens de fixation (8) sont surmoulés dans le bras de fixation (7) lors d'une opération de surmoulage de façon à obtenir des moyens de fixation (8) intégrés dans le bras de fixation (7).

2. Dispositif de mesure de position (1) selon la revendication 1, **caractérisé en ce que** les moyens de fixation (8) sont formés d'une ou plusieurs pièces distinctes du bras de fixation (7), fixées à ce dernier.

3. Dispositif de mesure de position (1) selon l'une quelconque des revendications 1 et 2, **caractérisé en ce que** le bras de fixation (7) comprend une bordure périphérique (11) et une fente (12) longeant la bordure périphérique (11), les moyens de fixation (8) étant partiellement insérés dans la fente (12) entre une portion supérieure (13) et une portion inférieure (14) du bras de fixation (7) délimitant la fente (12).

4. Dispositif de mesure de position (1) selon l'une quelconque des revendications 1 à 3, **caractérisé en ce que** les moyens de fixation (8) s'étendent par rapport au bras de fixation (7) dans un même plan (X, Y) que ce dernier, les moyens de fixation (8) et le bras de fixation (7) formant un ensemble de fixation (4) présentant une forme générale de disque.

5. Dispositif de mesure de position (1) selon l'une quelconque des revendications 1 à 4, **caractérisé en ce que** les moyens de fixation (8) sont formés d'un seul élément de fixation (8) monobloc.

6. Dispositif de mesure de position (1) selon la revendication 5, **caractérisé en ce que** le bras de fixation (7) comprend une partie d'extrémité (15) comprenant un orifice (16) présentant un axe central (C') destiné à être aligné avec l'axe de rotation (C) du rotor lorsque le dispositif de mesure de position (1) est monté sur le palier (9), l'élément de fixation (8) entourant au moins partiellement la partie d'extrémité (15) du bras de fixation (7).

7. Dispositif de mesure de position (1) selon l'une quelconque des revendications 1 à 6, **caractérisé en ce que** les moyens de fixation (8) comprennent au moins un orifice de fixation (17) destiné à recevoir une vis (18) se vissant dans un orifice fileté (19) prévu sur le palier (9) de l'unité de stator (2).

8. Dispositif de mesure de position (1) selon la revendication 7, **caractérisé en ce que** les moyens de fixation (8) comprennent deux orifices de fixation (17) positionnés en opposition et symétriquement par rapport à un plan de symétrie passant par l'axe central (C').

9. Dispositif de mesure de position (1) selon l'une quelconque des revendications 7 ou 8, **caractérisé en ce que** chaque orifice de fixation (17) présente une forme oblongue et incurvée, la courbure des orifices de fixation (17) ayant pour centre de courbure l'axe central (C').

10. Unité de stator (2) de machine électrique tournante (3) comprenant un stator muni d'un bobinage, **caractérisée en ce qu'**elle comprend un dispositif de mesure de position (1) tel que défini selon l'une quelconque des revendications 1 à 9.

11. Machine électrique tournante (3), **caractérisée en ce qu'**elle comprend une unité de stator (2) telle que définie selon la revendication 10, la machine électrique tournante (3) comportant un rotor monté en rotation dans l'unité de stator (2).

## Patentansprüche

1. Positionsmessvorrichtung (1) für eine Statoreinheit (2) einer rotierenden elektrischen Maschine (3), die einen Stator umfasst, in dem eine Wicklung angeordnet ist, wobei die rotierende elektrische Maschine (3) einen Rotor umfasst, welcher in der und in Bezug auf die Statoreinheit (2) um eine Drehachse (C) drehbar gelagert ist, wobei die Positionsmessvorrichtung (1) ein Sensorfach (5) umfasst, das dazu bestimmt ist, mindestens einen Positionssensor aufzunehmen, der die Position des Rotors in Bezug auf die Statoreinheit (2) misst, wobei die Positionsmessvorrichtung (1) dazu bestimmt ist, in einem axialen Endbereich (6) der Statoreinheit (2) so positioniert zu werden, dass dem Positionssensor ermöglicht wird, ein mit dem Rotor verbundenes rotierendes Ziel zu detektieren, wobei die Positionsmessvorrichtung (1) einen Befestigungsarm (7) umfasst, der in Bezug auf das Sensorfach (5) zur Drehachse (C) hin vorsteht, und Befestigungsmittel (8) umfasst, die mit dem Befestigungsarm (7) verbunden sind und dazu bestimmt sind, an einem Lager (9) der Statoreinheit (2) befestigt zu werden, wobei das Lager (9) aus Metall besteht und an einem axialen Ende (10) der Statoreinheit (2) positioniert ist, wobei das Sensorfach (5) und der Befestigungsarm (7) aus Polymer bestehen und die Befestigungsmittel (8) aus Metall bestehen, **dadurch gekennzeichnet, dass** die Befestigungsmittel (8) in einem Umspritzvorgang in den Befestigungsarm (7) eingeformt werden, derart, dass in den Befestigungsarm (7) integrierte Befestigungsmittel (8) erhalten werden.

2. Positionsmessvorrichtung (1) nach Anspruch 1, **dadurch gekennzeichnet, dass** die Befestigungsmittel (8) von einem oder mehreren verschiedenen Teilen des Befestigungsarmes (7) gebildet werden, die an diesem Letzteren befestigt sind.

3. Positionsmessvorrichtung (1) nach einem der Ansprüche 1 und 2, **dadurch gekennzeichnet, dass** der Befestigungsarm (7) einen umlaufenden Rand (11) und einen entlang des umlaufenden Randes (11) verlaufenden Schlitz (12) umfasst, wobei die Befestigungsmittel (8) zwischen einem oberen Abschnitt (13) und einem unteren Abschnitt (14) des Befestigungsarmes (7), die den Schlitz (12) begrenzen, teilweise in den Schlitz (12) eingefügt sind.

4. Positionsmessvorrichtung (1) nach einem der Ansprüche 1 bis 3, **dadurch gekennzeichnet, dass** sich die Befestigungsmittel (8) in Bezug auf den Befestigungsarm (7) in derselben Ebene (X, Y) wie dieser Letztere erstrecken, wobei die Befestigungsmittel (8) und der Befestigungsarm (7) eine Befestigungsanordnung (4) bilden, die im Wesentlichen eine Scheibenform aufweist.

5. Positionsmessvorrichtung (1) nach einem der Ansprüche 1 bis 4, **dadurch gekennzeichnet, dass** die Befestigungsmittel (8) von einem einzigen einstückigen Befestigungselement (8) gebildet werden.

6. Positionsmessvorrichtung (1) nach Anspruch 5, **dadurch gekennzeichnet, dass** der Befestigungsarm (7) einen Endteil (15) umfasst, der eine Öffnung (16) umfasst, die eine Mittelachse (C') aufweist, die dazu bestimmt ist, mit der Drehachse (C) des Rotors ausgerichtet zu werden, wenn die Positionsmessvorrichtung (1) auf dem Lager (9) angebracht wird, wobei das Befestigungselement (8) den Endteil (15) des Befestigungsarmes (7) wenigstens teilweise umgibt.

7. Positionsmessvorrichtung (1) nach einem der Ansprüche 1 bis 6, **dadurch gekennzeichnet, dass** die Befestigungsmittel (8) mindestens eine Befestigungsöffnung (17) umfassen, die dazu bestimmt ist, eine Schraube (18) aufzunehmen, die in eine am Lager (9) der Statoreinheit (2) vorgesehene Gewindebohrung (19) eingeschraubt wird.

8. Positionsmessvorrichtung (1) nach Anspruch 7, **dadurch gekennzeichnet, dass** die Befestigungsmittel (8) zwei Befestigungsöffnungen (17) umfassen, die einander gegenüberliegend und symmetrisch in Bezug auf eine durch die Mittelachse (C') verlaufende Symmetrieebene positioniert sind.

9. Positionsmessvorrichtung (1) nach einem der Ansprüche 7 oder 8, **dadurch gekennzeichnet, dass** jede Befestigungsöffnung (17) eine längliche und gekrümmte Form aufweist, wobei die Krümmung der Befestigungsöffnungen (17) die Mittelachse (C') als Krümmungsmittelpunkt aufweist.

10. Statoreinheit (2) einer rotierenden elektrischen Maschine (3), die einen Stator umfasst, der mit einer Wicklung ausgestattet ist, **dadurch gekennzeichnet, dass** sie eine Positionsmessvorrichtung (1) umfasst, wie in einem der Ansprüche 1 bis 9 definiert.

11. Rotierende elektrische Maschine (3), **dadurch gekennzeichnet, dass** sie eine Statoreinheit (2) umfasst, wie in Anspruch 10 definiert, wobei die rotierende elektrische Maschine (3) einen Rotor aufweist, der in der Statoreinheit (2) drehbar gelagert ist.

## Claims

1. Position measuring device (1) for a stator unit (2) of a rotary electric machine (3) comprising a stator in which a winding is disposed, the rotary electric machine (3) comprising a rotor mounted so as to rotate in and relative to the stator unit (2) about an axis of rotation (C), the position measuring device (1) comprising a sensor compartment (5) intended to house at least one position sensor measuring the position of the rotor relative to the stator unit (2), the position measuring device (1) being intended to be positioned in an axial end zone (6) of the stator unit (2) so as to allow the position sensor to detect a rotating target connected to the rotor, the position measuring device (1) comprising a fastening arm (7) projecting relative to the sensor compartment (5) towards the axis of rotation (C), and comprising fastening means (8) connected to the fastening arm (7) and intended to be fastened on a bearing (9) of the stator unit (2), the bearing (9) being made of metal and being positioned at an axial end (10) of the stator unit (2), the sensor compartment (5) and the fastening arm (7) being made of polymer and the fastening means (8) being made of metal, **characterized in that** the fastening means (8) are overmoulded in the fastening arm (7) during an overmoulding operation so as to obtain fastening means (8) that are integrated in the fastening arm (7).

2. Position measuring device (1) according to Claim 1, **characterized in that** the fastening means (8) are formed of one or more pieces separate from the fastening arm (7), which are fastened to the latter.

3. Position measuring device (1) according to either one of Claims 1 and 2, **characterized in that** the fastening arm (7) comprises a peripheral edge (11) and a slot (12) running along the peripheral edge (11), the fastening means (8) being partially inserted in the slot (12) between an upper portion (13) and a lower portion (14) of the fastening arm (7) delimiting the slot (12).

4. Position measuring device (1) according to any one of Claims 1 to 3, **characterized in that** the fastening means (8) extend relative to the fastening arm (7) in the same plane (X, Y) as the latter, the fastening means (8) and the fastening arm (7) forming a fastening assembly (4) having the overall shape of a disc.

5. Position measuring device (1) according to any one of Claims 1 to 4, **characterized in that** the fastening means (8) are formed of a single one-piece fastening element (8).

6. Position measuring device (1) according to Claim 5, **characterized in that** the fastening arm (7) comprises an end part (15) comprising a hole (16) having a central axis (C') intended to be aligned with the axis of rotation (C) of the rotor when the position measuring device (1) is mounted on the bearing (9), the fastening element (8) at least partially surrounding the end part (15) of the fastening arm (7).

7. Position measuring device (1) according to any one of Claims 1 to 6, **characterized in that** the fastening means (8) comprise at least one fastening hole (17) intended to receive a screw (18) that screws into a threaded hole (19) provided on the bearing (9) of the stator unit (2).

8. Position measuring device (1) according to Claim 7, **characterized in that** the fastening means (8) comprise two fastening holes (17) positioned opposite one another and symmetrically relative to a plane of symmetry passing through the central axis (C').

9. Position measuring device (1) according to either one of Claims 7 and 8, **characterized in that** each fastening hole (17) has an oblong and curved shape, the curvature of the fastening holes (17) having the central axis (C') as centre of curvature.

10. Stator unit (2) of a rotary electric machine (3) comprising a stator provided with a winding, **characterized in that** it comprises a position measuring device (1) as defined in any one of Claims 1 to 9.

11. Rotary electric machine (3), **characterized in that** it comprises a stator unit (2) as defined in Claim 10, the rotary electric machine (3) comprising a rotor mounted so as to rotate in the stator unit (2).
